(19) **Europäisches Patentamt**
**European Patent Office**
**Office européen des brevets**

(11) Veröffentlichungsnummer : **0 484 270 A2**

(12) # EUROPÄISCHE PATENTANMELDUNG

(21) Anmeldenummer : **91810721.0**

(22) Anmeldetag : **06.09.91**

(51) Int. Cl.$^5$ : **G01S 17/02, G01S 7/48, G02B 23/08**

(30) Priorität : **02.11.90 CH 3482/90**

(43) Veröffentlichungstag der Anmeldung :
**06.05.92 Patentblatt 92/19**

(84) Benannte Vertragsstaaten :
**AT BE CH DE DK ES FR GB IT LI NL SE**

(71) Anmelder : **ELESTA AG ELEKTRONIK**
**Elestastrasse 8**
**CH-7310 Bad Ragaz (CH)**

(72) Erfinder : **Lutz, Eric**
**Heuteilstrasse 9**
**CH-7310 Bad Ragaz (CH)**

(74) Vertreter : **Riederer, Conrad A., Dr.**
**Bahnhofstrasse 10**
**CH-7310 Bad Ragaz (CH)**

(54) **Lichttaster oder Lichtschranke.**

(57) Das Licht des Lichtsenders (23) wird durch die Plankonvexlinse (33) kollimiert und durch die Planfläche (41) durch interne Totalreflektion um neunzig Grad abgelenkt. Der aus dem Fenster (29) der Haube (27) austretende Lichtstrahl (51) trifft auf den reflektierenden Gegenstand oder einen Reflektor und wird dadurch zurückgeworfen. Der zurückgeworfene Lichtstrahl fällt durch das Fenster (29) auf die Plankonvexlinse (35) und wird durch interne Totalreflektion an der Planfläche (41) umgelenkt. Durch Brechung an der gewölbten Fläche (39) erfolgt eine Fokussierung zum Lichtempfänger (25). Der Kopf (13) ist schmaler als der Basisteil, so dass der Lichttaster oder die Lichtschranke mit dem Kopf voran in eine Montagebohrung eingeführt werden kann.

Fig. 2          Fig. 3

EP 0 484 270 A2

Die Erfindung betrifft einen Lichttaster oder eine Lichtschranke mit einem Lichtsender und einem Lichtempfänger, mit einer Plankonvexlinse, um das Licht des Lichtsenders in Form eines Lichtbündels auszusenden, bzw. das eintreffende Lichtbündel auf den Lichtempfänger zu fokussieren, wobei die Planfläche der Plankonvexlinse mit einer Neigung zur optischen Achse des Lichtsenders, bzw. Lichtempfängers angeordnet ist.

Lichttaster und Lichtschranken haben gemeinsam, dass sie einen Lichtsender und einen Lichtempfänger aufweisen. Lichttaster und Lichtsender unterscheiden sich im wesentlichen nur dadurch, dass beim Lichttaster das vom festzustellenden Gegenstand reflektierte Licht festgestellt wird, während bei der Lichtschranke die durch den festzustellenden Gegenstand verursachte Unterbrechung des Lichtstrahls vom Lichtempfänger festgestellt wird. Im einzelnen kann auch erwähnt werden, dass beim Lichttaster Lichtsender und Lichtempfänger im gleichen Gehäuse untergebracht sind. Lichttaster eignen sich insbesondere für relativ kleine Entfernungen.

Bei den Lichtschranken unterscheidet man zwischen Einweg-Lichtschranken und Reflektions-Lichtschranken. Die Einweg-Lichtschranke arbeitet mit einem Lichtsender und einem entfernt vom Lichtsender angeordneten Lichtempfänger. Einweg-Lichtschranken haben den Vorteil, dass sie über relativ grosse Entfernungen einsatzfähig sind.

Bei der Reflektions-Lichtschranke sind, wie beim Lichttaster, Lichtsender und Lichtempfänger im gleichen Gehäuse untergebracht. Der Lichtstrahl wird über einen Reflektor zurückgelenkt und zur Signalauslösung vom Objekt unterbrochen.

Lichttaster und Lichtschranken werden in verschiedenen Ausführungen gebaut. In neuerer Zeit erfreuen sich rohrförmige Lichtschranken grosser Beliebtheit. Diese Lichtschranken sind besonders montagefreundlich. Sie weisen in der Regel ein Aussengewinde auf, so dass sie in Bohrungen eingesetzt und mit zwei Muttern festgeschraubt werden können. Bei diesen bekannten Lichttastern und Lichtschranken verläuft der Lichtstrahl in der gleichen Richtung wie die Gehäuseachse, zu welcher auch die optischen Achsen des Lichtsenders und des Lichtempfängers parallel verlaufen. Es hat sich dann aber das Bedürfnis nach Geräten ergeben, bei welchen der Lichtstrahl in einem Winkel von vorzugsweise neunzig Grad zur Gehäuseachse ausgestrahlt bzw. empfangen wird. Solche Geräte werden in Publikationen verschiedener Hersteller beschrieben:

– Winkellichtschranke WS17/2
Leuze electronic GmbH + Co., D-7311 Owen-Teck
– Reflexlichtschranke OPTOR M 18 x 1
Schönbuch Electronic, D-7045 Nufringen
– FF-AG Kompakt-Lichtschranken
Honeywell

Diesen Lichtschranken ist gemeinsam, dass sie einen Umlenkkopf aufweisen, der grössere Abmessungen hat als das normalerweise 18 mm Durchmesser aufweisende Gehäuse der Lichtschranke. Dies hat den Nachteil, dass die Lichtschranke nicht mit dem Umlenkkopf voran in die Montagebohrung eingeführt werden kann. Dadurch wird die Montage erschwert. Nachteilig ist auch der Lichtverlust im Umlenkkopf, welcher einen Spiegel aufweist. Auch wenn ein teurer Spiegel von hoher Qualität verwendet wird, wird das Lichtsignal durch zweimalige Umlenkung erheblich geschwächt.

Geräte mit Umlenkspiegel besitzen vielfach einen offenen Umlenkkopf. So wird bei dem mit PHOTOSWITCH SERIE 6000 bezeichneten Gerät der Electronic Corporation of America der Spiegel von zwei seitlichen Trägern getragen. Es besteht somit die Gefahr, dass der Spiegel z.B. durch Staub verschmutzt wird. Ist der Spiegel einmal verschmutzt, so kann er nur schwierig gereinigt werden, weil er schlecht zugänglich ist. Es ist offensichtlich, dass bei einem solchen Gerägt, um eines sogenanntes Uebersprechen (crosstalk) zu vermeiden, bewusst auf eine Fensterscheibe verzichtet wurde. An einer solchen Fensterscheibe würde nämlich der ausgehende Lichtstrahl Reflektionen verursachen, welche über den Spiegel auf den Empfänger zurückgeleitet würden. Dadurch würde das Gerät für gewisse Anwendungen, z.B. als Lichttester für relativ schwach reflektierende Objekte, unbrauchbar gemacht.

Durch die EP-A-0 170 008 ist ein Lichttaster oder eine Lichtschranke bekanntgeworden, bei welcher die Planfläche einer Plankonvexlinse mit einer Neigung von etwa zwei bis zehn Grad zur Achse angeordnet ist. Dieser Entgegenhaltung lässt sich jedoch nicht die Lehre entnehmen, einen Lichttaster oder eine Lichtschranke als Winkellichtschranke zu bauen, zumal die beschriebene Neigung von zwei bis zehn Grad lediglich die Aufgabe aufweist, zu verhindern, dass beim Austritt des Lichts ein relativ hoher Lichtanteil zurückgeworfen wird und beim Lichtempfänger ein Störsignal erzeugt. Der zitierten Literaturstellen ist auch zu entnehmen, dass bei Kunststofffliessen beim Austritt des Lichts ein relativ grosser Lichtanteil zurückgeworfen wird, also relativ hohe Lichtverluste entstehen.

Es ist Aufgabe der vorliegenden Erfindung, einen Lichttaster oder eine Lichtschranke zu schaffen, welche als Winkellichttaste oder Winkellichtschranke eingesetzt werden kann, aber die Nachteile eines bei solchen Lichttastern oder Lichtschranken üblichen Umlenkkopfs mit Spiegel nicht aufweist.

Ausgehend von einer Lichtschranke gemäss der EP-0 170 008 mit den eingangs erwähnten Merkmalen, wird gemäss der vorliegenden Erfindung die Lösung der Aufgabe dadurch erreicht, dass die Neigung der Planfläche im Bereich liegt, bei welchem das vom Lichtsender ausgehende Lichtbündel, bzw. das eintreffende Lichtbündel durch interne Totalreflektion umgelenkt wird. Dies ermöglicht den Bau eines sehr kompakten Geräts, das bei zylindrischer Ausführung auch das Einsetzen mit dem Kopf voran in eine Montagebohrung erlaubt. Da kein Umlenkspiegel notwendig ist, treten auch keine grossen Lichtverluste auf. Die Umlenkung durch interne Totalreflektion ist praktisch verlustfrei. Gesamthaft gesehen sind die Lichtverluste sehr klein, da zur Kollimation und Umlenkung bzw. zur Umlenkung und Fokussierung das austretende Lichtbündel bzw. das eintreffende Lichtbündel nur je einmal aus dem Kunststoffmaterial austreten müssen. Weil kein zusätzliches Element zur Ablenkung der Lichtbündel notwendig ist, lässt sich der Lichttaster oder die Lichtschranke auch relativ billig fertigen.

Zweckmässigerweise ist der Lichttaster oder die Lichtschranke mit einer Haube versehen, die ein seitlich angeordnetes Fenster aufweist und die Plankonvexlinse umschliesst, wobei die Innenwandung der Haube in einem Abstand von der Planfläche der Plankonvexlinse angeordnet ist. Durch diese Haube wird eine Störung der Funktion der Plankonvexlinse durch Flüssigkeit oder Staub vermieden. Durch die Ablagerung von Flüssigkeit oder Staub auf der Planfläche der Plankonvexlinse würde die die interne Totalreflektion mindestens partiell verhindert.

Zweckmässigerweise besteht das Fenster aus anorganischem Material, z.B. aus Glas. Glas weist eine hohe Beständigkeit gegen Chemikalien auf, die z.B. in Reinigungsmitteln anzutreffen sind und die Trübung eines aus Kunststoff bestehenden Fensters bewirken könnten.

Zweckmässigerweise ist die Plankonvexlinse auf einem in die Haube einschiebbaren Träger angeordnet. Dies ergibt eine zweckmässige, die Fertigung vereinfachende Konstruktion. Beim Träger kann eine quer zu den optischen Achsen von Lichtsender und Lichtempfänger verlaufende Führungsbahn zur Aufnahme der Plankonvexlinse vorgesehen sein. Dadurch wird die Plankonvexlinse in axialer Richtung gesichert.

Bei Lichttastern und Reflexlichtschranken sind normalerweise Lichtsender und Lichtempfänger im gleichen Gehäuse angeordnet. In einem solchen Fall ist es zweckmässig, eine Plankonvexlinse für den Lichtsender und eine Plankonvexlinse für den Lichtempfänger vorzusehen. Dadurch wird verhindert, dass Streulicht vom Lichtsender auf den Lichtempfänger gelenkt wird. Wenn eine Plankonvexlinse für den Lichtsender und eine Plankonvexlinse für den Lichtempfänger vorgesehen sind, kann die Haube im Innern eine axial verlaufende Trennwand aufweisen, um die Plankonvexlinsen voneinander optisch zu trennen. Vorteilhaft sind z.B. am Träger Distanzmittel vorgesehen, um die Plankonvexlinsen seitlich voneinander zu beabstanden. Dadurch wird bei der Montage des Trägers mit den Plankonvexlinsen erreicht, dass die Trennwand problemlos zwischen die Plankonvexlinsen zu liegen kommt. Vorteilhaft besitzt der Träger je eine Aufnahmeöffnung für den Lichtsender und den Lichtempfänger, um diese voneinander optisch zu trennen. Dadurch wird durch den Träger noch eine weitere zusätzliche Funktion erfüllt, ohne dass dazu ein weiteres Teil notwendig ist.

Zweckmässigerweise bilden Haube, Träger und Plankonvexlinse oder -linsen eine kopfförmige Baueinheit, welche auf das Basisgehäuse der Lichtschranke aufgesetzt werden kann, in welchem der Lichtsender und/oder der Lichtempfänger angeordnet sind. Dies hat den Vorteil, dass der gleiche Lichttaster oder die gleiche Lichtschranke mit dieser kopfförmigen Baueinheit als Winkellichttaster oder -schranke und mit einer anderen kopfförmigen Baueinheit als gewöhnlicher Lichttaster oder Lichtschranke verwendbar ist.

Das Gehäuse kann rohrförmig sein und vorzugsweise als Verschraubung ausgebildet werden, wobei die kopfförmige Baueinheit einen kleineren Durchmesser aufweist als das rohrförmige Gehäuse, um Kopf voraus ein Hineinstecken in eine Montagebohrung zu ermöglichen.

Ein Ausführungsbeispiel des Lichttasters bzw. der Lichtschranke wird nun unter Bezugnahme auf die Zeichnung beschrieben. Es zeigt:

Fig. 1 eine perspektivische Darstellung des erfindungsgemässen Lichttasters, bzw. der erfindungsgemässen Lichtschranke,

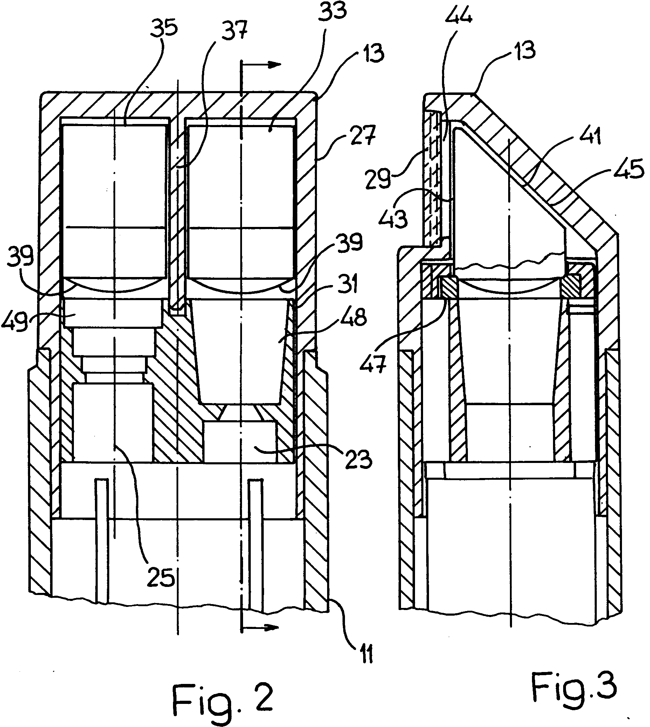

Fig. 2 einen Schnitt durch den Kopf und einen Teil des Basisgehäuses, und

Fig. 3 einen Schnitt entlang der Linie III-III von Fig. 2.

Die Lichtschranke besteht im wesentlichen aus dem Basisteil 11, dem Kopf 13 und dem Anschlusskabel 15. Beim dargestellten Beispiel ist die Lichtschranke rohrförmig und weist ein Gewinde 17 auf, mit welchem sie in üblicher Weise mittels zweier Muttern (nicht dargestellt) in einer Montageöffnung befestigt werden kann. Die Lichtschranke ist auf einander entgegenüberliegenden Seiten abgeplattet, weist also Montageflächen 19 auf, welche auch eine Befestigung mittels Schrauben auf einer Fläche ermöglichen. Zu einer solchen Befestigung mit Schrauben sind Durchgangslöcher 21 vorgesehen.

Im Gehäuse 12 des Basisteils 11 ist ein Lichtsender 23 und ein Lichtempfänger 25 untergebracht. Der Kopf 13 besitzt eine Haube 27 mit einem Fenster 29. Dieses kann eine blosse Oeffnung sein. Zweckmässig ist jedoch ein Fenster 29 aus einem organischen oder einem anorganischen Material, z.B. Kunststoff bzw. Glas. In der Haube 27 ist ein Träger 31 eingeschoben, auf welchem eine Plankonvexlinse 33 für den Lichtsender und eine Plankonvexlinse 35 für den Lichtempfänger 25 angeordnet sind. Eine Trennwand 37 im Innern der Haube 27 sorgt für die optische Trennung der beiden Plankonvexlinsen 33, 35, welche beide die gleiche Form aufweisen. Jede Plankonvexlinse besitzt eine gewölbte Fläche 39, eine erste Planfläche 41 und eine zweite Planfläche 43. Die zweite Planfläche 43 ist vom Fenster 29 nur durch einen kleinen Luftspalt 44 beabstandet. Reflektionen des aus der Plankonvexlinse 33 ausgehenden Lichtstrahls können daher nicht auf die Plankonvexlinse 35 zum Lichtempfänger gelangen. Die Neigung der Planfläche 41 liegt in einem Bereich, bei welchem das vom Lichtsender 23 ausgehende Lichtbündel, bzw. das von aussen eintreffende Lichtbündel durch interne Totalreflektion umgelenkt wird. Beim gezeigten Ausführungsbeispiel erfolgt die Umlenkung um neunzig Grad. Zu diesem Zweck muss das Linsenmaterial einen entsprechenden Brechungsindex aufweisen. Bei dem von der Anmelderin verwendeten Kunststoff liegt der Brechungsindex im Infrarotbereich bei 1,56. Die erste Planfläche 41 ist beim gezeigten Ausführungsbeispiel in einem Winkel von fünfundvierzig Grad zur optischen Achse des Lichtsenders geneigt. Die zweite Planfläche 43 ist in einem Winkel von fünfundvierzig Grad zur ersten Planfläche 41 angeordnet. Die vorliegende Erfindung ist jedoch nicht auf eine Strahlablenkung von neunzig Grad beschränkt. Der mögliche Ablenkungswinkel wird lediglich durch die Tatsache begrenzt, dass die Planfläche 41 einen Winkel aufweisen muss, bei welchem eine Totalreflektion stattfindet.

Damit die Totalreflektion nicht gestört wird, ist die Innenwandung 45 in einem Abstand von der Planfläche 41 angeordnet.

Im Träger 31 ist eine Führungsbahn 47 vorgesehen, in welche die Plankonvexlinsen 33, 35 eingeschoben sind. Der Träger 31 weist je eine Aufnahmeöffnung 48, 49 für den Lichtsender 23 bzw. den Lichtempfänger 25 auf. Dadurch wird eine optische Trennung von Lichtsender und Lichtempfänger bewirkt.

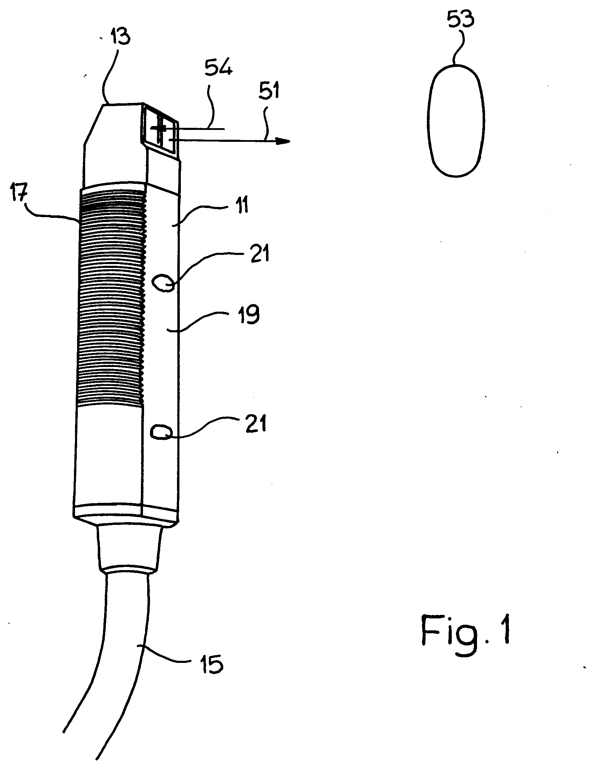

Im Betrieb des Lichttasters oder der Lichtschranke wird das Licht des Lichtsenders 23 durch die Plankonvexlinse 33 kollimiert. Das Lichtbündel wird dann durch die Planfläche 41 durch interne Totalreflektion um den gewünschten Winkel, z.B. neunzig Grad, abgelenkt. Der aus dem Fenster 29 austretende Lichtstrahl 51 (Fig. 1) trifft auf den reflektierenden Gegenstand oder den Reflektor 53 und wird dann, wie mit dem Pfeil 54 angedeutet, zurückgeworfen, fällt durch das Fenster 29 auf die Planfläche 43 der Plankonvexlinse 35 und wird schliesslich interne durch Totalreflektion an der Planfläche 41 umgelenkt und durch die gewölbte Fläche zum Lichtempfänger 25 fokussiert, um ein entsprechendes Signal zu erzeugen.

Es sind verschiedene Abänderungen möglich, ohne von der Erfindung abzuweichen. So können beispielsweise Lichtsender und Lichtempfänger in verschiedenen Gehäusen untergebracht sein.

**Patentansprüche**

1. Lichttaster oder Lichtschranke, mit einem Lichtsender (23) und einem Lichtempfänger (25), einer Plankonvexlinse (33, 35) um das Licht des Lichtsenders (23) in Form eines Lichtbündels auszusenden, bzw. das eintreffende Lichtbündel auf den Lichtempfänger (25) zu fokussieren, wobei die Planfläche (41) der Plankonvexlinse (33, 35) mit einer Neigung (alpha) zur optischen Achse des Lichtsenders (23), bzw. Lichtempfängers (25) angeordnet ist, dadurch gekennzeichnet, dass die Neigung (alpha) der Planfläche (41) im Bereich liegt, bei welchem das vom Lichtsender (23) ausgehende Lichtbündel, bzw. das von aussen eintreffende Lichtbündel durch interne Totalreflektion umgelenkt wird.

2. Lichttaster oder Lichtschranke nach Anspruch 1, dadurch gekennzeichnet, dass eine Haube (27) mit einem seitlich angeordneten Fenster (29) die Plankonvexlinse (33, 35) umschliesst, wobei die Innenwandung (45) der Haube (27) in einem Abstand von der Planfläche (41) der Plankonvexlinse (33, 35) angeordnet ist.

3. Lichttaster oder Lichtschranke nach Anspruch 2, dadurch gekennzeichnet, dass das Fenster (29) aus anorganischem Material, z.B. aus Glas, besteht.

4. Lichttaster oder Lichtschranke nach einem der Ansprüche 1 bis 3, dadurch gekennzeichnet, dass die Plankonvexlinse (33, 35) auf einem in die Haube (27) einschiebbaren Träger (31) angeordnet ist.

5. Lichttaster oder Lichtschranke nach Anspruch 4, dadurch gekennzeichnet, dass der Träger (31) eine quer zu den optischen Achsen verlaufende Führungsbahn (47) zur Aufnahme der Plankonvexlinse (33, 35) aufweist.

6. Lichttaster oder Lichtschranke nach einem der Ansprüche 1 bis 5, bei welchen Lichtsender (23) und Lichtempfänger (25) im gleichen Gehäuse (11) angeordnet sind, dadurch gekennzeichnet, dass eine Plankonvexlinse (33) für den Lichtsender (23) und eine Plankonvexlinse (35) für den Lichtempfänger (25) vorgesehen sind.

7. Lichttaster oder Lichtschranke nach einem der Ansprüche 4 bis 6, dadurch gekennzeichnet, z.B. am Träger (31) Distanzmittel vorgesehen sind, um die Plankonvexlinsen (33, 35) seitlich voneinander zu beabstanden.

8. Lichttaster oder Lichtschranke nach einem der Ansprüche 4 bis 7, dadurch gekennzeichnet, dass der Träger (31) je eine Aufnahmeöffnung (48, 49) für den Lichtsender (23) und den Lichtempfänger (25) aufweist, um diese voneinander optisch zu trennen.

9. Lichttaster oder Lichtschranke nach einem der Ansprüche 4 bis 8, dadurch gekennzeichnet, dass Haube (27), Träger (31) und Plankonvexlinse oder -linsen (33, 35) eine kopfförmige Baueinheit (13) bilden, welche auf dem Basisteil (11) aufgesetzt werden kann, in welchem der Lichtsender (23) und/oder der Lichtempfänger (25) angeordnet sind.

10. Lichttaster oder Lichtschranke nach einem der Ansprüche 1 bis 9, dadurch gekennzeichnet, dass das Gehäuse (12) des Basisteils (11) rohrförmig, vorzugsweise als Verschraubung (17), ausgebildet ist, und dass die kopfförmige Baueinheit (13) einen kleineren Durchmesser aufweist als das rohrförmige Gehäuse (12), um ein Hineinstecken in eine Montagebohrung kopfvoran zu ermöglichen.

Fig. 1

Fig. 2

Fig. 3